(19) Europäisches Patentamt
European Patent Office
Office européen des brevets

(11) **EP 1 934 083 B1**

(12) **FASCICULE DE BREVET EUROPEEN**

(45) Date de publication et mention
de la délivrance du brevet:
**14.07.2010 Bulletin 2010/28**

(51) Int Cl.:
***B62D 5/04*** *(2006.01)*      ***B60K 28/06*** *(2006.01)*

(21) Numéro de dépôt: **06794385.2**

(22) Date de dépôt: **04.09.2006**

(86) Numéro de dépôt international:
**PCT/FR2006/002029**

(87) Numéro de publication internationale:
**WO 2007/031619 (22.03.2007 Gazette 2007/12)**

(54) **PROCEDE POUR LA DETECTION DE LA TENUE D'UN VOLANT DE CONDUITE D'UNE DIRECTION ASSISTEE ELECTRIQUE DE VEHICULE AUTOMOBILE**

**VERFAHREN ZUM ERFASSEN DES GRIFFS AN EINEM LENKRAD FÜR KRAFTFAHRZEUGSERVOLENKUNG**

**METHOD FOR DETECTING THE GRIP ON A STEERING WHEEL OF A MOTOR VEHICLE ELECTRICAL POWER STEERING**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.09.2005 FR 0509382**

(43) Date de publication de la demande:
**25.06.2008 Bulletin 2008/26**

(73) Titulaire: **JTEKT Europe**
**69450 Irigy (FR)**

(72) Inventeurs:
• **RAVIER, Christophe**
**F-69005 Lyon (FR)**
• **MICHELIS, André**
**F 69520 Grigny (FR)**
• **CASSAR, Stéphane**
**F-69004 Lyon (FR)**

(74) Mandataire: **Bratel, Gérard et al**
**Cabinet Germain & Maureau**
**BP 6153**
**69006 Lyon Cedex 06 (FR)**

(56) Documents cités:
**EP-A- 1 645 454      WO-A-01/60254**
**WO-A-02/25614**

• **PATENT ABSTRACTS OF JAPAN vol. 1999, no. 14, 22 décembre 1999 (1999-12-22) & JP 11 245836 A (HONDA MOTOR CO LTD), 14 septembre 1999 (1999-09-14)**
• **PATENT ABSTRACTS OF JAPAN vol. 2002, no. 06, 4 juin 2002 (2002-06-04) & JP 2002 037111 A (KOYO SEIKO CO LTD), 6 février 2002 (2002-02-06)**

**Description**

La présente invention concerne, de façon générale, les véhicules automobiles équipés d'une direction assistée électrique. Plus particulièrement, cette invention s'intéresse à un procédé pour la détection de la tenue d'un volant de conduite d'une direction assistée électrique de véhicule automobile,

De manière généralement connue, une direction assistée électrique de véhicule automobile comprend un moteur électrique d'assistance, à deux sens de rotation, dont l'arbre de sortie est habituellement accouplé, par l'intermédiaire d'un réducteur de vitesse par exemple à vis sans fin et roue tangente, à la colonne de direction du véhicule, de manière à transmettre un couple moteur (éventuellement aussi un couple résistant) à cette colonne de direction.

Le couple d'assistance est lui-même communiqué, par l'intermédiaire de la partie mécanique de la direction généralement du type à pignon et crémaillère, aux deux roues directrices du véhicule concerné, de manière à les orienter en vue d'un braquage à droite ou à gauche, ou d'un redressement. Le document JP-A-11 245836 décrit un procédé pour la détection de la tenue d'un volant de conduite selon le préambule de la revendication 1.

On connaît aussi des directions assistées électriques avec système d'assistance agissant sur la crémaillère; dans de tels systèmes, le moteur électrique d'assistance est accouplé, par exemple, à un réducteur du type vis à billes qui transmet l'effort d'assistance directement à la crémaillère.

Le moteur électrique d'assistance est piloté par un calculateur électronique embarqué, qui reçoit divers signaux d'entrée et qui les traite, de manière à commander de manière optimisée, à chaque instant, le moteur électrique d'assistance.

Les grandeurs d'entrée ainsi exploitées dans le calculateur, pour la régulation de la direction assistée électrique, sont en particulier la position angulaire instantanée du volant de conduite du véhicule, et/ou du moteur électrique d'assistance, le couple exercé par le conducteur sur le volant, et la vitesse instantanée du véhicule.

Le calculateur peut aussi exploiter d'autres paramètres, déduits par un calcul, par exemple la vitesse de rotation du volant obtenue en tant que dérivée, par rapport au temps, de l'angle du votant.

En ce qui concerne plus particulièrement le couple exercé par le conducteur sur le volant, la mesure de couple est habituellement réalisée, lorsque le véhicule circule, par un capteur de couple disposé en général sur la colonne de direction.

L'information fournie par un tel capteur est traitée par le calculateur embarqué, pour déterminer la consigne de couple que le moteur électrique d'assistance doit appliquer au cours d'un virage.

Pour assurer un confort de conduite maximal, le calculateur électronique applique différentes "stratégies" de commande de l'assistance selon les phases de conduite. En particulier, certaines stratégies doivent s'activer uniquement lorsque le conducteur ne tient pas le volant, pour, par exemple, pouvoir réaliser des calibrations en temps réel du système de direction.

Pour réaliser ces opérations, il s'avère donc nécessaire de pouvoir distinguer une tenue même très légère du volant par le conducteur, d'un lâcher total de ce dernier, par exemple à un feu rouge. Cette détection peut s'avérer nécessaire aussi bien lorsque le véhicule est à l'arrêt, que lorsqu'il roule.

Les systèmes actuels de détection de la tenue du volant nécessitent généralement un capteur ou équipement supplémentaire, qui complique et rend plus onéreux le système de direction.

La présente invention vise à éviter cet inconvénient en proposant un procédé permettant de déterminer précisément et de manière efficace, sans nécessiter de capteur ou équipement supplémentaire, si le conducteur tient ou non le volant, même si cette tenue engendre des couples très faibles, de l'ordre du dixième de Nm.

A cet effet, l'invention a pour objet un procédé pour la détection de la tenue d'un volant de conduite d'une direction assistée électrique de véhicule automobile, la direction comprenant un moteur électrique d'assistance piloté par un calculateur électronique embarqué, notamment à partir de mesures du couple au volant réalisées par un capteur de couple disposé sur la colonne de direction, ce procédé consistant :

- à initialiser à zéro une variable de compteur de mesures effectuées par ledit capteur de couple;
- tant que la variable de compteur est de valeur inférieure à un seuil d'acquisitions prédéterminé, à mettre en mémoire une valeur de mesure par ledit capteur du couple au volant, à incrémenter de un la variable de compteur de mesures, puis à calculer une variance des valeurs mesurées du couple au volant;

- à émettre un signal de tenue de volant si la variance calculée est supérieure à un seuil de variance prédéterminé,
- à émettre un signal de non tenue de volant si la variance calculée est inférieure audit seuil de variance prédéterminé.

Ainsi, le procédé selon l'invention est basé sur une analyse statistique d'un signal d'entrée analogique provenant du capteur de couple.

Les signaux de tenue ou de non tenue de volant sont par exemple des signaux booléens adressés au calculateur électronique en vue d'être traités et utilisés localement dans le système de direction pour le pilotage du moteur électrique d'assistance, ou adressés par un réseau embarqué dans le véhicule en vue d'une utilisation autre, par exemple pour avertir le conducteur en cas d'endormissement, etc.

L'invention sera de toute façon mieux comprise à l'aide de la description qui suit, en référence au dessin schématique annexé illustrant, à titre d'exemple, un mode de mise en oeuvre de ce procédé.

La figure 1 est une vue en perspective, schématisée, d'une direction assistée électrique pouvant mettre en oeuvre le procédé de l'invention.

La figure 2 est un exemple de courbe de mesures du couple au volant afin d'illustrer l'invention dans son principe.

La figure 3 est un schéma-bloc qui illustre le procédé complet objet de l'invention.

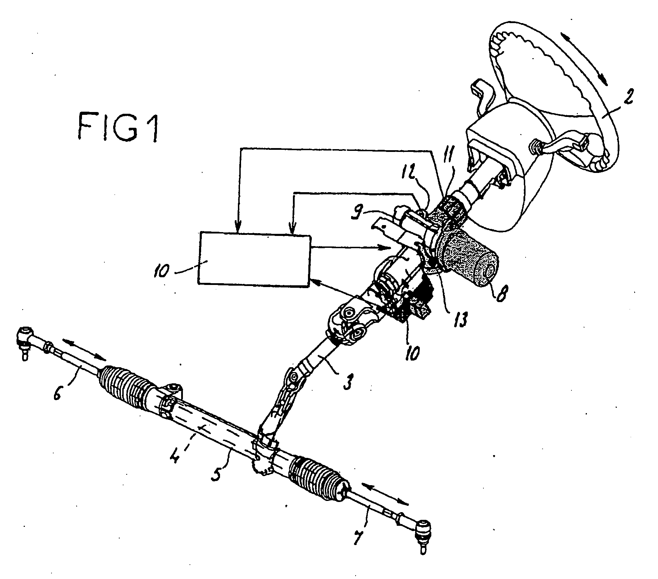

La figure 1 rappelle quels sont les principaux éléments composant un système de direction assistée électrique.

Une telle direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5.

Les deux extrémités opposées de la crémaillère 4 sont respectivement liées, par l'intermédiaire de biellettes 6 et 7, aux roues directrices droite et gauche (non représentées) du véhicule automobile concerné.

La direction comprend, pour assister l'effort manuel exercé par le conducteur du véhicule sur le volant 2, un moteur électrique d'assistance 8 à deux sens de rotation, dont l'arbre de sortie est accouplé, par l'intermédiaire d'un réducteur de vitesse 9 notamment à vis sans fin et roue tangente, à la colonne de direction 3, de manière à transmettre un couple moteur (éventuellement aussi un couple résistant) à cette colonne de direction 3.

Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit un signal électrique issu d'un capteur 11 de l'angle du volant 2, représentatif de l'angle instantané de braquage du véhicule automobile concerné, et ce calculateur 10 reçoit aussi un signal issu d'un capteur de couple 12 placé sur la colonne de direction 3, et mesurant ainsi le couple exercé par le conducteur sur le volant 2.

Dans l'exemple illustré, il est encore prévu un capteur 13 de la position instantanée du moteur électrique d'assistance 8.

A partir de ces diverses informations, et éventuellement de paramètre extérieurs à la direction, tels que la vitesse du véhicule, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

L'invention est plus particulièrement basée sur une analyse statistique du signal fourni par le capteur de couple 12.

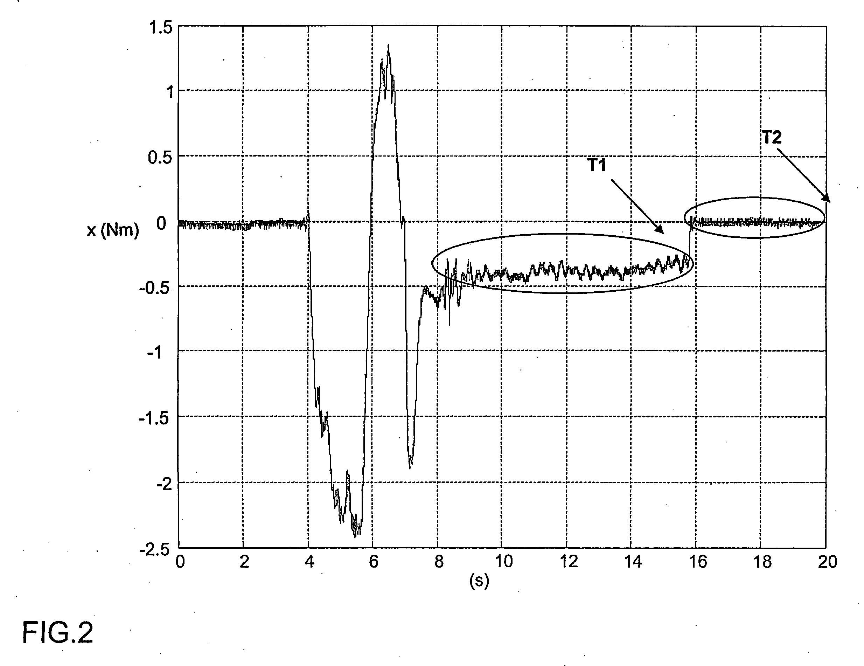

Sur la courbe de la figure 2, des mesures du signal de couple au volant sont effectuées lors du roulage du véhicule.

Sur cette courbe, on peut distinguer deux phases T1 et T2: l'une T1, de 9 secondes à 15. secondes, durant laquelle le volant est légèrement tenu par le conducteur, et l'autre T2, de 16 secondes à 19,5 secondes, durant laquelle le volant est lâché.

On remarque que, durant ces deux phases T1 et T2, le niveau de couple est relativement faible, ici inférieur à 0,5 Nm.

Un calcul de la variance sur ces deux zones T1 et T2 donne une variance de $1,32.10^{-3}$ $N^2.m^2$ pour T1 (avec le volant légèrement tenu) et une variance de $0,1.10^{-3}$ $N^2.m^2$ pour T2 (avec le volant lâché).

Même si l'amplitude du signal de couple est quasiment identique, le rapport des variances entre ces deux cas est ainsi supérieur à 10, ce qui permet, par le procédé objet de l'invention, de distinguer de manière simple, fiable et précise si le volant est tenu ou non.

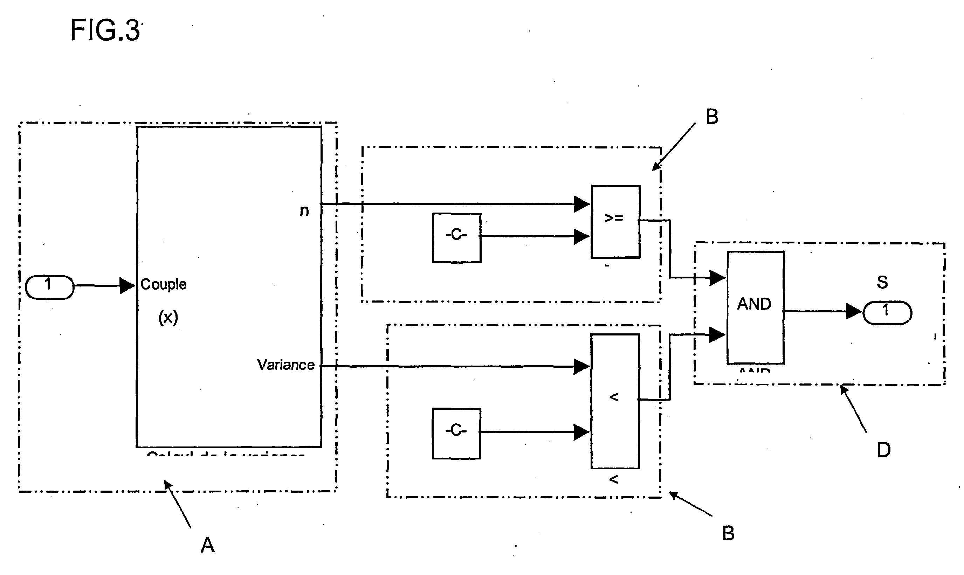

La figure 3 représente un schéma-bloc, en quatre blocs A, B, C et D, d'un mode de mise en oeuvre du procédé selon l'invention.

A chaque nouvelle mesure de couple x par le capteur 12, un premier bloc A incrémente de un une variable n de compteur des points de mesure à analyser, et calcule une variance des n points de mesure x relevés selon la formule:

$$Variance = \frac{n \cdot \sum x^2 - (\sum x)^2}{n \cdot (n-1)}.$$

Un bloc B vérifie que le nombre n de points de mesure x atteint un seuil N prédéterminé selon la fréquence d'acquisition de points de mesure souhaitée.

Un bloc C vérifie que la variance des n points de mesure x relevés est inférieure à un seuil de variance M prédéterminé qui distingue les états "volant lâché" et "volant tenu".

Enfin, un bloc D relie les sorties des blocs B et C par un opérateur booléen "ET".

Lorsque la variance des N points de mesure relevés est inférieure au seuil M, le signal de sortie S du bloc D égale un, ce qui signifie que le volant n'est pas tenu.

En revanche, quand la variance des N points de mesure relevés est supérieure au seuil M, le signal de sortie S du bloc D égale zéro, ce qui signifie que le conducteur exerce un couple même très faible sur le volant.

La variable n est bien entendu réinitialisée à zéro après cette vérification.

Contrairement aux systèmes connus de détection de tenue du volant, la solution développée par le Demandeur ne nécessite aucun capteur ou équipement supplémentaire.

Seule une stratégie de commande spécifique est mise en oeuvre au niveau du calculateur électronique 10 pour obtenir cette information qui peut donc venir en complément (dans le cas d'une solution redondée) ou en remplacement des solutions de l'art antérieur.

Comme il va de soi, l'invention ne se limite pas au seul mode de mise en oeuvre de ce procédé qui a été décrit ci-dessus, à titre d'exemple ; elle en embrasse, au contraire, toutes les variantes de réalisation et d'application respectant le même principe. C'est ainsi que l'on ne s'éloignerait pas du cadre de l'invention, quels que soient notamment les particularités de la direction assistée électrique concernée, le détail de l'algorithme ou les moyens de calcul mis en oeuvre.

**Revendications**

1. Procédé pour la détection de la tenue d'un volant de conduite (2) d'une direction assistée électrique de véhicule automobile, la direction comprenant un moteur électrique d'assistance (8) piloté par un calculateur électronique (10) embarqué, notamment à partir de mesures du couple au volant (2) réalisées par un capteur de couple (12) disposé sur la colonne de direction (3), **caractérisé en ce qu'**il consiste

   - à initialiser à zéro une variable (n) de compteur de mesures (x) effectuées par ledit capteur de couple (12);
   - tant que la variable de compteur (n) est de valeur inférieure à un seuil (N) prédéterminé,

      - à mettre en mémoire une valeur (x) de mesure par ledit capteur (12) du couple au volant,
      - à incrémenter de un la variable (n) de compteur de mesures,
      - à calculer une variance (Variance) des (n) valeurs mesurées (x) du couple au volant par la formule suivante:

$$Variance = \frac{n \cdot \sum x^2 - \left(\sum x\right)^2}{n \cdot (n-1)} \ ;$$

      - à émettre un signal de tenue de volant (S=0) si la variance calculée (Variance) est supérieure à un seuil de variance (M) prédéterminé,
      - à émettre un signal de non tenue de volant (S=1) si la variance calculée (Variance) est inférieure audit seuil de variance (M) prédéterminé.

2. Procédé selon la revendication 1, **caractérisé en ce que** les signaux de tenue ou de non-tenue de volant sont des signaux booléens (S) adressés au calculateur électronique (10) en vue d'être traités pour le pilotage du moteur électrique d'assistance (8) ou adressés par un réseau embarqué dans le véhicule en vue d'une utilisation autre.

**Claims**

1. Method for detecting the grip on a steering wheel (2) of a motor vehicle power-assisted steering, the steering comprising an assistance electric motor (8) controlled by an onboard electronic computer (10), in particular on the basis of steering wheel (2) torque measurements carried out by a torque sensor (12) disposed on the steering column (3), **characterized in that** it consists

   - in initializing to zero a variable (n) of counter of measurements (x) performed by the said torque sensor (12);
   - as long as the value of the counter variable (n) is below a predetermined threshold (N),
   - in placing in memory a value (x) of measurement by the said sensor (12) of the steering wheel torque,

- in incrementing the measurements counter variable (n) by one,
- in computing a variance (variance) of the (n) measured values (x) of the steering wheel torque through the following formula:

$$\text{Variance} \ = \ \frac{n \cdot \sum x^2 - \left( \sum x \right)^2}{n \cdot (n-1)} \ ;$$

- in emitting a steering wheel grip signal (S=0) if the computed variance (Variance) is above a predetermined variance threshold (M),
- in emitting a steering wheel no-grip signal (S=1) if the computed variance (Variance) is below the said predetermined variance threshold (M).

2. Method according to Claim 1, **characterized in that** the steering wheel grip or no-grip signals are Boolean signals (S) addressed to the electronic computer (10) with a view to being processed for the control of the assistance electric motor (8) or addressed by an onboard network embedded in the vehicle with a view to another use.

**Patentansprüche**

1. Verfahren zur Erfassung des Haltens eines Lenkrads (2) einer elektrischen Kraftfahrzeug-Servolenkung, wobei die Lenkung einen von einem an Bord befindlichen elektronischen Rechner gesteuerten elektrischen Unterstützungsmotor (8) enthält, insbesondere ausgehend von Messungen des Drehmoments des Lenkrads (2), die von einem auf der Lenksäule (3) angeordneten Drehmomentsensor (12) durchgeführt werden, **dadurch gekennzeichnet, dass** es darin besteht

- eine Zählervariable (n) von vom Drehmomentsensor (12) ausgeführten Messungen (x) auf Null zu initialisieren;
- so lange die Zählervariable (n) einen Wert unter einer vorbestimmten Schwelle (N) hat,

  - einen Wert (x) einer Messung durch den Sensor (12) des Lenkradmoments zu speichern,
  - die Zählervariable (n) von Messungen um Eins zu inkrementieren,
  - eine Varianz (Varianz) der (n) gemessenen Werte (x) des Lenkradmoments folgendermaßen zu berechnen:

$$\text{Varianz} \ = \ \frac{n. \sum x^2 - \left( \sum x \right)^2}{n.(n-1)}$$

  - ein Signal des Haltens des Lenkrads (S=0) zu senden, wenn die berechnete Varianz (Varianz) über einer vorbestimmten Varianzschwelle (M) liegt,
  - ein Signal des Nicht-Haltens des Lenkrads (S=1) zu senden, wenn die berechnete Varianz (Varianz) unter der vorbestimmten Varianzschwelle (M) liegt.

2. Verfahren nach Anspruch 1, **dadurch gekennzeichnet, dass** die Signale des Haltens oder des Nicht-Haltens des Lenkrads boolesche Signale (S) sind, die an den elektronischen Rechner (10) übermittelt werden, um für die Steuerung des elektrischen Unterstützungsmotors (8) verarbeitet zu werden, oder von einem an Bord des Fahrzeugs befindlichen Netzwerk für eine andere Verwendung angesteuert werden.

FIG 1

FIG.2

EP 1 934 083 B1

FIG.3

EP 1 934 083 B1

**EP 1 934 083 B1**

## RÉFÉRENCES CITÉES DANS LA DESCRIPTION

**Documents brevets cités dans la description**

- JP 11245836 A